Europäisches Patentamt

European Patent Office

Office européen des brevets

(19)

(11) Publication number: **0 410 506 A2**

# EUROPEAN PATENT APPLICATION

(12)

(21) Application number: 90201915.7

(51) Int. Cl.⁵: **A23G 3/00**

(22) Date of filing: 16.07.90

(30) Priority: 25.07.89 EP 89201946

(43) Date of publication of application:
30.01.91 Bulletin 91/05

(84) Designated Contracting States:
AT BE CH DE DK ES FR GB GR IT LI NL SE

(71) Applicant: **UNILEVER NV**
**Burgemeester s'Jacobplein 1 P.O. Box 760**
**NL-3000 DK Rotterdam(NL)**

(84) **BE**

Applicant: **UNILEVER PLC**
**Unilever House Blackfriars P.O. Box 68**
**London EC4P 4BQ(GB)**

(84) **GB**

(72) Inventor: **Talbot, Geoffrey**
**22 The Elms**
**Kempston, Beds(GB)**

(74) Representative: **Mulder, Cornelis Willem**
**Reinier, Dr. et al**
**UNILEVER N.V. Patent Division P.O. Box 137**
**NL-3130 AC Vlaardingen(NL)**

(54) Confectionery composition.

(57) The invention pertains to chew compositions on the basis of a blend of one or more polyol fatty acid polyesters, a sweetening component, water, and further chew ingredients, said blens of one or more polyol fatty acid polyesters having a $N_{35}$ of below 10 and $N_{20}$ of between 10 and 60. Chew compositions are obtained having good organoleptic quality and exhibiting excellent workability at above ambient temperatures and good resistence to creeping.

EP 0 410 506 A2

## CONFECTIONERY COMPOSITION

The present invention relates to confectionery compositions, and in particular to confectionery compositions for application in plastic confectionery products known as chews.

Chews, such as the well known toffees, are confectionery products on the basis of fat, sugar, water and flavouring. Chews are used both as such and as fillings of (chocolate) coated products. They are characterised by a relatively firm rheology at room temperature, but a quick-melting behaviour, easy chewability and workability at higher temperatures, in particular at mouth temperature. In addition to the obvious characteristics necessary for the consumer to appreciate the confectionery product as a chew or toffee, from a processing point of view easy workability at temperatures of above ambient which is necessary for extrusion, should be combined with a resistance to the phenomenon of creeping, i.e. the immediate or longer-term loss of shape as a result of too high a plasticity. The combination of easy workability and no or reduced creeping is particularly important to allow convenient wrapping and/or coating of the chew products.

It has now been found that if a substantial proportion of the fat component in plastic confectionery products is based upon polyol fatty acid polyesters of specific melting behaviour, it is possible to produce chew products of good organoleptic quality which exhibit excellent workability at temperatures above ambient and good resistance to creeping.

Polyol fatty acid polyesters have been suggested as fat-replacers in the general area of low-calorie food products, in particular to reduce the caloric content of the traditionally high-fat food products such as salad dressings, margarines, shortenings, and the like. Low-calorie food products comprising polyol fatty acid polyesters are disclosed in US 3,600,186.

In JP 62/205738 minor amounts of sucrose palmitate (0.5-3 % by weight of the fat phase) are suggested as crystal growth inhibitors in shortenings and chocolate compositions.

In US 3,093,481 polyol fatty acid polyesters such as sucrose octastearate and octapalmitate are suggested for inclusion into shortenings in amounts of up to 0.5 %. They are stated to have beneficial effects upon stability and consistency of the shortenings.

In US 2,886,438 chocolate mixes and shortenings comprising up to 5 % by weight of the fat of a fatty acid ester of an unsubstituted monoalkyl-glucoside, such as ethylglucoside stearate are disclosed. The glucoside esters are stated to have beneficial effects upon consistency and appearance.

In EP 0 236 288 the suitability in food products of polyol fatty acid polyesters having a specific viscosity and solids/liquid stability at $37°C$, is described. Among the many types of food applications also chocolates, chocolate confections, and fillings are mentioned.

EP 0 271 951 discloses cocoa-butter substitutes on the basis of sucrose fatty acid polyesters wherein the fatty acid radicals are derived from lauric-palmitic or capric-stearic sources.

EP 0 285 187 discloses cocoa-butter substitutes for chocolate compositions based upon sucrose fatty acid polyesters characterized by a clear melting point between 30 and $36°C$ and a SCI of over 66 at $6.6°C$ below the clear melting point.

In EP 0 290 420 there are disclosed shortening compositions comprising so-called intermediate melting sucrose fatty acid polyesters (specific viscosity and solids/liquid stability at $37°C$ and iodine values (IV) of between 25 and 55) in combination with small amounts of solid hardstock material of very low IV. Among the potential applications chocolate confections and fillings are mentioned.

Up to now the application of the calorie-reduced polyol fatty acid polyesters to chew compositions has not been disclosed or suggested.

Accordingly, the present invention provides a chew composition essentially consisting of:

(1) from 10 to 45 % by weight of a blend of one or more polyol fatty acid polyesters,

(2) from 30 to 70 % by weight of a sweetening component,

(3) from 1 to 10 % by weight of water, and

(4) up to 59 % by weight of further chew ingredients, said blend of one or more polyol fatty acid polyesters having a $N_{35}$ of below 10 and a $N_{20}$ of between 10 and 60.

The polyol fatty acid polyesters employed in the present invention are fatty acid polyesters derived from aliphatic compounds which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of the preferred sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and α-methylglucoside. The sucrose polyol is preferred most.

The degree of conversion to polyester, which is defined as the percentage of polyol hydroxyl groups that, on an average, have been esterified with fatty acids, should be over 70 %, and preferably is over 85 or even 95 %.

In general and preferably in view of low-calorie aspects, polyol fatty acid polyesters having the high degrees of conversion in accordance with the invention, are selected from indigestible polyesters. For the purposes of the invention by indigestibility is meant that at least about 70 % by weight of the material concerned is not digested by the human body.

Polyol fatty acid polyesters for use in the present invention can be suitably defined by way of their melting profiles. Such melting profiles are conveniently described by an N-line or N-values. The N-line is the graph of $N_t$-values versus the temperature t. The $N_t$-value is conveniently measured by the nuclear magnetic relaxation technique and is a direct measure of the level of solid fat at temperature t. This method is suitably described in Fette, Seifen, Anstrichmittel 80(5) , 180-186 (1978). To some extent the measurement of $N_t$-values is dependent on the temperature profile used to prepare the samples for the NMR-measurement. For the purposes of the present invention the following preparatory temperature profile is adopted: first 30 minutes at 60 °C, followed by 90 minutes at 0 °C, 40 hours at 26 °C, again 90 minutes at 0 °C and finally 60 minutes at the temperature of the measurement, after which the NMR measurement is carried out.

At 35 °C the N-value of the polyol fatty acid polyester or mixture of polyol fatty acid polyesters should be relatively low, in particular below about 10 and preferably between 5 and 10. To ensure the appropriate chew rheology typical $N_{20}$-values are within the range of from 10 to 60, and particularly, between 30 and 60. $N_{20}$-values of between 45 and 60 are preferred.

In general fatty acids per se, lower alkylesters thereof or naturally occurring fats and oils may be used as source for the polyester fatty acids. Conventional techniques may be used to introduce the required fatty acid composition and degree of saturation. Suitable such techniques include full or partial hydrogenation, interesterification and fractionation, and may be used before or after conversion of the polyols to the corresponding polyol fatty acid polyesters.

Sources of suitable polyester fatty acids blends are vegetable oils, in particular soybean, sunflower, safflower, cottonseed, palm and lauric oils, such as coconut and palm kernel oils. Such oils may be partially or fully hydrogenated, and in optimising to specific product specifications the use of mixtures of, optionally partially or fully hydrogenated oils may be of special advantage, such as e.g. fully hydrogenated palm and palm kernel oils or mixtures thereof.

Instead of a 'single' polyol fatty acid polyester, i.e. a polyester which is synthesized from a polyol and a source for the fatty acid residues in a single reaction, also a mixture of polyol fatty acid polyesters may be used provided the overall solids profile of the final blend is in accordance with the present invention.

In this specification the term 'blend' is intended to encompass both a single polyol fatty acid polyester and a mixture of more than one polyol fatty acid polyester.

The fat component of the chew compositions in accordance with the present invention may consist solely of the blend of one or more polyol fatty acid polyesters, but it may also comprise relatively small amounts of in particular milk fat and flavour-introducing oils, such as natural cocoa-butter and nut oils, such as hazelnut and peanut oils, provided such mixing does not result in a fat phase having a solids versus temperature profile outside the range as indicated hereinbefore for the blend of polyesters. If a mixture is considered desirable, the amount of polyester should be 50 to 100 % by weight of fat components in the chew composition. To take full advantage of the invention, as well as the low-calorie aspect, the fat component preferably consists of 75 to 100 %, and most preferably of 80 to 95 %, of the blend of one or more polyol fatty acid polyesters.

In general the chew composition comprises overall from 10 to 45 % of a fat component, and preferably comprises from 15 to 25 % of a fat component.

In addition to the fat component the chew composition comprises a sweetening component. The sweetening component may be selected from the common sugars, such as sucrose and raffinose, included in amounts of from 30 to 70 %, in particular of from 40 to 60 % by weight of the confectionery composition. To the extent allowed by the required organoleptic characteristics of chews these conventional sugars may also be replaced by dietetic sweeteners such as sorbitol, fructose, xylitol and lactitol which provide compositions particularly suitable to avoid tooth decay or in diabetic diets. Such dietetic sweeteners are included in similar amounts as conventional sugars, i.e. in amounts of 30 to 70 % by weight of the final confectionery composition. Inclusion of sorbitol and xylitol has the further advantage to increase the cool-melting sensation of the plastic confectionery compositions.

In addition to the fat and sweetening components the chew compositions of the invention further comprise a small but essential amount of water, suitable amounts ranging from 1 to 10 % by weight of the composition. Preferably the amount of water ranges of from 3 to 5 % by weight.

The chew compositions may also include further ingredients, in particular flavouring, such as vanilla, coffee, cocoa, mint, nut or fruit flavourings, milk solids in the form of skimmed or full milk powder, emulsifier, such as in particular lecithin, anti-oxidants, dietary fibers, and vitamins, such as vitamin E.

The chew compositions may be prepared by conventional methods. Such preparation methods generally include the steps of heating the basic ingredients to a relatively high temperature, such as e.g. 100 to 125°C, to prepare a molten continuous glass after which the composition is cooled down, extruded and processed to the desired shape and wrapping.

The invention is now further illustrated by way of example.

EXAMPLE 1

A toffee product was prepared having the following composition:

| ingredients | % by weight |
|---|---|
| granulated sugar | 27.0 |
| liquid glucose | 27.0 |
| condensed milk | 27.0 |
| sucrose fatty acid polyester [1] | 11.5 |
| sucrose fatty acid polyester [2] | 5.0 |
| water | 2.2 |
| salt | 0.2 |
| flavouring | 0.1 |

(1) sucrose fatty acid polyester derived from a blend of 55 % fully hardened soybean oil and 45 % partially hardened soybean oil (slip melting point of 28°C), degree of conversion: > 95 %
(2) sucrose fatty acid polyester derived from a partially hardened soybean oil (slip melting point of 28°C)

The toffee product was boiled to 118°C and then poured into a 4-sided frame of dimensions 145 x 190 mm. When full, one of the short sides of the frame was removed allowing warm flow of the toffee product to occur. After 3 minutes and 30 minutes the dimensions of the toffee product were measured to determine the extent of warm flow. Subsequently the toffee product was assessed on cold flow properties over a period of 24 hours. Results are given in Table 1 showing the good creep properties of the polyester based toffee product.

TABLE 1

| time | dimension of toffee product |
|---|---|
| at start | 190 mm |
| after 3 minutes | 247 mm |
| after 30 minutes | 251 mm |
| after 24 hours | 251 mm |

**Claims**

1. A chew composition essentially consisting of:
    (1) from 10 to 45 % by weight of a blend of one or more polyol fatty acid polyesters, (2) from 30 to 70 %

4

EP 0 410 506 A2

by weight of a sweetening component, (3) from 1 to 10 % by weight of water, and (4) up to 59 % by weight of further chew ingredients, said blend of one or more polyol fatty acid polyesters having a $N_{35}$ of below 10 and a $N_{20}$ of between 10 and 60.

5